# EUROPEAN PATENT APPLICATION

(11) **EP 0 538 552 A2**
(43) Date of publication of application: **28.04.1993**
(21) Application number: 92108764.9
(22) Date of filing: 25.05.1992
(51) Int. Cl.: H04B 10/20, H04B 10/00

(54) **High speed array processor bus**

(30) Priority: 21.10.1991 US 779664
(71) Applicant: ROCKWELL INTERNATIONAL CORPORATION, Seal Beach, California 90740-8250 (US)
(72) Inventor: Hickey, Paul Richard, Mission Viejo, CA 92692 (US)
(74) Representative: Geyer, Ulrich F., Dr. Dipl.-Phys.

(57) **Abstract**

The HIGH SPEED ARRAY PROCESSOR BUS shown herein includes a number of modules 12, 14, 16 and 18. Module 12 may transmit directly by a fiber optic 30 to a receiver 50 on the top of module 14 immediately below it, and indirectly through a fiber optic 66 in this second module 14 to a receiver 72 in a third module 16 immediately below the second module 14. Communication between first 12 and third 16 modules may be entirely optical, or signals may be retransmitted by the processor 46 of the second module 14. Bus bars 84, 88 provide power and ground voltages to the sides of the modules 12, 14, 16 and 18.

## Description

### BACKGROUND OF THE INVENTION

The present invention relates to buses between array processors, and has particular relation to such buses which are optical.

The conventional bus serving an array of processors comprises a plurality (typically 16 or more) of parallel wires. Such buses impose high capacitive loads and are slow, unreliable, fault intolerant, inflexible, radiation soft, wastefull of power, and bulky. Such disadvantages could be eliminated if an optical bus could be developed with the necessary ease of fabrication, assembly, and ease of repair and replacement.

### SUMMARY OF THE INVENTION

It is an objective of the present invention to provide an optical bus between processors in an array.

It is a feature of the present invention that each processor may be included within a separate module.

It is an additional feature of the present invention that a set of processors may be included within each module.

It is a further feature of the present invention that the modules may be easily stacked to allow optical interconnection.

### BRIEF DESCRIPTION OF THE DRAWINGS

FIG. 1 shows a cross-sectional view of four modules, demonstrating how they may be fitted together.

FIG. 2 shows a cross-sectional view of the same four modules in an assembled configuration.

FIG. 3 is an exploded view of two modules, showing how a bus bar may be used to provide both power and mechanical support.

FIG. 4 is a top plan view of a module, showing how individual bus bars at the corners and along the sides of the module may be bolted to the module.

### DETAILED DESCRIPTION OF A PREFERRED EMBODIMENT

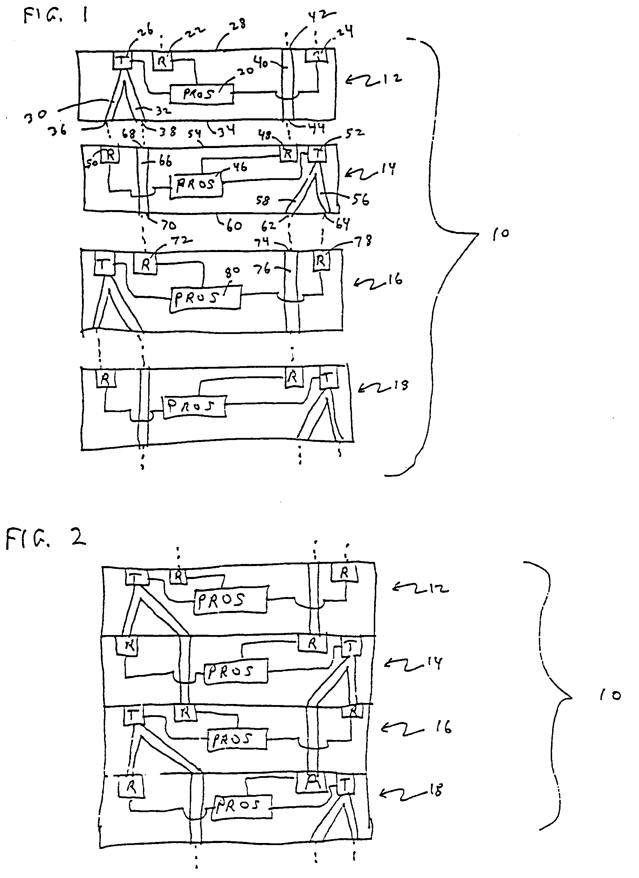

FIG. 1 shows an assemblage 10 of modules 12, 14, 16, and 18. Modules 12 and 16 are identical, as are modules 14 and 18. Modules 14 and 18 are inverses of modules 12 and 16; that is, they are identical to modules 12 and 16, but rotated 180 degrees.

First module 12 includes at least one processor 20 which is connected to a first receiver 22, a second receiver 24, and a transmitter 26. "Processor," as used herein, includes a processor per se (which is preferred), but also includes a memory or other electronic device, and further includes sets of such processors, and should be construed accordingly. The receivers 22 and 24 and transmitter 26 may conveniently be placed on an upper surface 28 of the module 12. The receivers 22 and 24 receive optical signals, convert them to electronic signals, and send the electronic signals to the processor 20. The processor 20 in turn sends electronic signals to the transmitter 26, which converts them to optical signals and transmits them down a first fiber optic 30 and a second fiber optic 32, which proceed downwardly from the transmitter 26, and which emerge on a lower surface 34 of the module 12 at locations 36 and 38, respectively. A third fiber optic 40 penetrates the module 12 from a location 42 on the upper surface 28 to a location 44 on the lower surface 34. "Fiber optic", as used herein, also applies to all forms of optical interconnect including optical waveguide such as micro channeled silicon substrate.

Second module 14 is identical to first module 12, except that it is rotated 180 degrees. The components of second module 14 are the same as the components of first module 12, and their reference numerals are incremented by 26 over the reference numerals of the corresponding components of first module 12.

In second module 14, the first receiver 48 is aligned with the bottom end 44 of the third fiber optic 40 of the first module 12. Likewise, the top end 68 of the third fiber optic 66 of second module 14 is aligned with the bottom end 38 of the second fiber optic 32 of the first module 12. Finally, the second receiver 50 of second module 14 is aligned with the bottom end 36 of the first fiber optic 30 of the first module 12.

Third module 16 is similarly connected. The bottom end 70 of the third fiber optic 66 of second module 14 is aligned with the first receiver 72 of the third module 16. The bottom end 62 of the second fiber optic 58 of the second module 14 is aligned with the top end 74 of the third fiber optic 76 of the third module 16. The bottom end 64 of the first fiber optic 56 of the second module 14 is aligned with the second receiver 78 of the third module 16. Third module 16 is the inverse of second module 14 (i.e., rotated 180 degrees), and thus is identical to first module 12.

It is thus seen that the processor 20 of first module 12 may communicate with the processor 46 of second module 14 by means of the transmitter 26, first fiber optic 30, and receiver 50. At the same time, the processor 20 of first module 12 may communicate with the processor 80 of third module 16 in either of two ways. First, it may go via transmitter 26, second fiber optic 32, third fiber optic 66, and receiver 72. This entirely optical path bypasses any electronic involvement of second module 14. If, however, any component of this route should fail, a second route is available for communication between the processor 20 of module 12 and the processor 80 of module 16. In this route, a signal is passed through transmitter 26 to receiver 50 of the second module 14, where it is passed through the processor 46 to transmitter 52, and thence through first fiber optic 56 to receiver 78, and thence to processor 80.

Second module 14 may communicate with fourth module 18 through third module 16 in exactly the same way. It must be reiterated that the position of the transmitters and receivers, and of the fiber optics, in each of these modules is identical. Subject to this limitation, the modules themselves need not be identical, but preferably are. Thus, simply rotating alternate modules by 180 degrees makes them compatible with one another. The separate modules shown in FIG. 1 are shown assembled into a compact stack in FIG. 2.

The processors 20, 46, 80 need not be identical, but preferably are. If they are, then the failure of, for example, third fiber optic 66 of second module 14 may be easily remedied by reprogramming processor 46 of second module 14 to simply pass through the signals it receives from first module 12, and by reprogramming the processor of third module 16 with the program which previously resided in the processor of second module 14. Likewise, the program which previously resided in the processor of third module 16 is displaced downward to reside in the processor of fourth module 18, and so on down the stack. Thus, the provision of one or more spare processors in each of a set of modules will greatly enhance the reliability of the entire stack of modules.

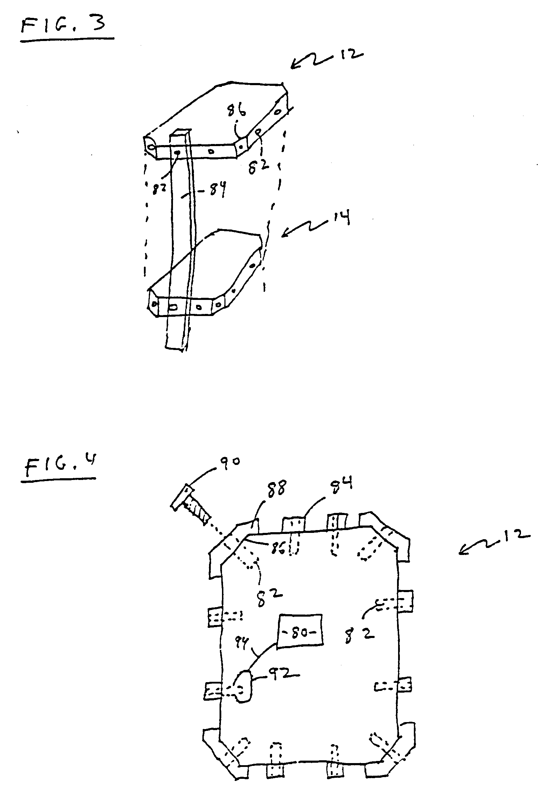

FIG. 3 shows how a module 12, 14 may be conveniently be supplied with bolt holes 82, onto which bus bars 84 may be bolted. If, as is preferred, the modules are two to three inches square, and approximately 1/4 inch thick, the bus bars may conveniently have a cross-section of 1/4 inch by 1/8 inch. The bus bars 84 are preferably made of copper, but any conducting material is suitable. As shown in FIG. 3, the corners 86 of the modules 12, 14 are preferably beveled. The purpose for this becomes apparent in FIG. 4, which shows how beveled bus bars 88 may be affixed to the beveled corners 86 with bolts 90. While a bolt 90 is preferred, any suitable means may be used to affix the bus bars 84, 88 to the modules 12, 14, such as screws, solder, etc. Beveling of the corner bus bars 88 provides considerable additional stiffness at small cost of extra material or reduced conductivity.

The bolts 90 not only provide mechanical support of the modules 12, 14 to the bus bars 84, 88, but also provide power (or grounding, as the case may be) to respective bus bar receivers 92 within the module 12, 14. Each bus bar receiver 92 is connected to the processor 80 by a conductor 94.

The corner bus bars 88 preferably are grounded, while side bus bars 84 provide power. Two of the side bus bars 84 typically provide power at 5 volts and one provides power at 18 volts. Additional bus bars 84 may be provided if desired.

The bus bars 84, 88 provide only power and a ground plane to the modules 12, 14. They do not transmit signals from one module to another. Such signal transmission is done entirely optically, as is shown in FIGs. 1 and 2.

### INDUSTRIAL APPLICABILITY

The present invention is capable of exploitation in industry, and can be used, whenever it is desired to provide a reliable, high speed, optical bus between or among a plurality of processors. It can be made out of components, which, taken separate and apart from one another, are entirely conventional, or it can be made out of their nonconventional counterparts.

While a particular embodiment of the present invention has been described, the true spirit and scope of the present invention are not limited thereto, but are limited only by the appended claims.

## Claims

1. A module comprising:
(a) a processor;
(b) a first optical receiver and a second optical receiver, each connected for receiving optical signals, for converting them to electronic signals, and for passing the electronic signals to the processor;
(c) an optical transmitter connected for receiving electronic signals from the processor, for converting them to optical signals, and for transmitting the optical signals;
(d) a first fiber optic proceeding from the optical transmitter and connected for passing an optical signal from the optical transmitter to a first optical receiver on a second module, the second module being a 180 degree rotated inverse of the first module;
(e) a second fiber optic proceeding from the optical transmitter and connected for passing an optical signal from the optical transmitter to a third fiber optic of the second module, the third fiber optic of the second module in turn being connected for passing the optical signal to a second optical receiver of a third module, the third module being a 180 degree rotated inverse of the second module; and
(f) a third fiber optic passing through the first module and being connected for passing an optical signal to a second optical receiver of the second module.

2. A plurality of modules as claimed in Claim 1, with every other module rotated 180 degrees relative to the adjacent modules, the optical transmitter of each module being optically connected to the first optical receiver of a second module immediately beneath it, and being indirectly connected through the third fiber optic in the second module to the second optical receiver in a third module immediately beneath the second module.

3. The module of Claim 1, further comprising ground and power receiving means situated at an edge of said module.

4. A plurality of modules as claimed in Claim 3, with every other module rotated 180 degrees relative to the adjacent modules, the optical transmitter of each module being optically connected to the first optical receiver of a second module immediately beneath it, and being indirectly connected through the third fiber optic in the second module to the second optical receiver in a third module immediately beneath the second module.

5. The plurality of modules as claimed in Claim 4, further comprising a plurality of bus bars, each bus bar being affixed to a respective bus bar receiver in at least one of said modules, and each bus bar receiver being connected to the processor in the module.
